# EUROPEAN PATENT APPLICATION

(11) **EP 2 432 245 A2**
(43) Date of publication of application: **21.03.2012**
(21) Application number: 11176132.6
(22) Date of filing: 01.08.2011
(51) Int. Cl.: H04N 21/6543, H04N 21/236, H04N 21/854

(54) **Transmitting apparatus, transmitting method, receiving apparatus, receiving method, program, and broadcasting system**

(30) Priority: 15.09.2010 JP 2010206851
(71) Applicant: Sony Corporation, Tokyo 108-0075 (JP)
(72) Inventor: Hattori, Shinobu, Minato-ku, Tokyo 108-0075 (JP); Kitazato, Naohisa, Minato-ku, Tokyo 108-0075 (JP)
(74) Representative: Malden, Nicholas

(57) **Abstract**

A broadcasting system includes: a transmitting apparatus transmitting contents, and a receiving apparatus receiving the contents transmitted thereto. The transmitting apparatus includes a trigger information generating section, an encoding section, a multiplexing section, and a sending section. The receiving apparatus includes a receiving section, a multiply separating section, a decoding section, and a control section.

## Description

The present disclosure relates to a transmitting apparatus, a transmitting method, a receiving apparatus, a receiving method, a program, and a broadcasting system. In particularly, the disclosure relates to a transmitting apparatus, a transmitting method, a receiving apparatus, a receiving method, a program, and a broadcasting system which are suitable for being used in the case where contents of a data broadcasting are executed in conjunction with a program or a commercial message (CM), for example, in a digital television broadcasting.

Heretofore, the digitization of a television broadcasting has been promoted in Japan, and a terrestrial digital broadcasting, a BS digital broadcasting, and the like are in widespread use. In addition, in the digital television broadcasting such as the terrestrial digital broadcasting, not only the broadcasting of the program (contents), but also the so-called data broadcasting are realized. According to the contents in the data broadcasting, for example, information relating to a program being broadcasted can be displayed, or information not relating to the program being broadcasted (such as an announcement of other programs, news, a weather forecast, and traffic information) can be displayed. This technique, for example, is disclosed in Japanese Patent Laid-Open No. 2006-50237.

It is noted that a band dedicated to the data broadcasting is previously ensured within a broadcasting band of the digital television broadcasting in digitizing the television broadcasting. Thus, the contents for the data broadcasting are broadcasted by using the dedicated band, thereby realizing the data broadcasting in Japan.

On the other hand, in the digital television broadcasting in U.S.A., the band dedicated to the data broadcasting like the digital television broadcasting in Japan is not ensured.

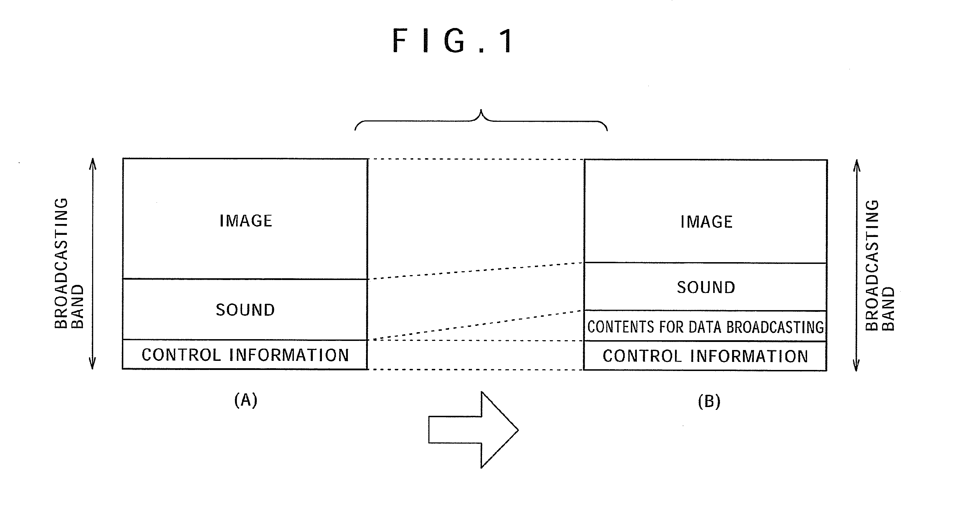

That is to say, as shown in (A) of FIG. 1, the actual broadcasting band of the digital television broadcasting in U.S.A. is occupied by a band for an image, a band for a sound, and a band for control information. Thus, a band for the broadcasting of the contents for the data broadcasting is not provided. Therefore, for the purpose of ensuring the band for the broadcasting of the contents for the data broadcasting in the limited broadcasting band of the digital television broadcasting, as shown in (B) of FIG. 1, for example, it is necessary to narrow both of the band for the image, and the band for the sound.

However, the insuring of the band for the broadcasting of the contents for the data broadcasting by narrowing of both the band for the image, and the band for the sound leads to the deterioration of the image quality and the sound quality of the television broadcasting. Therefore, this is hardly to say the realistic approach.

In addition, even if the band of the contents for the data broadcasting is ensured, an amount of transmittable data is limited. Therefore, an amount of information on the contents for the data broadcasting becomes scarce. Or, when an amount of information is described to be increased, it takes time until a receiving side receives the necessary data.

In addition, since in U.S.A., a retransmitting system of the digital television broadcasting using a cable television (CATV) network is in widespread use, the following problem may be caused.

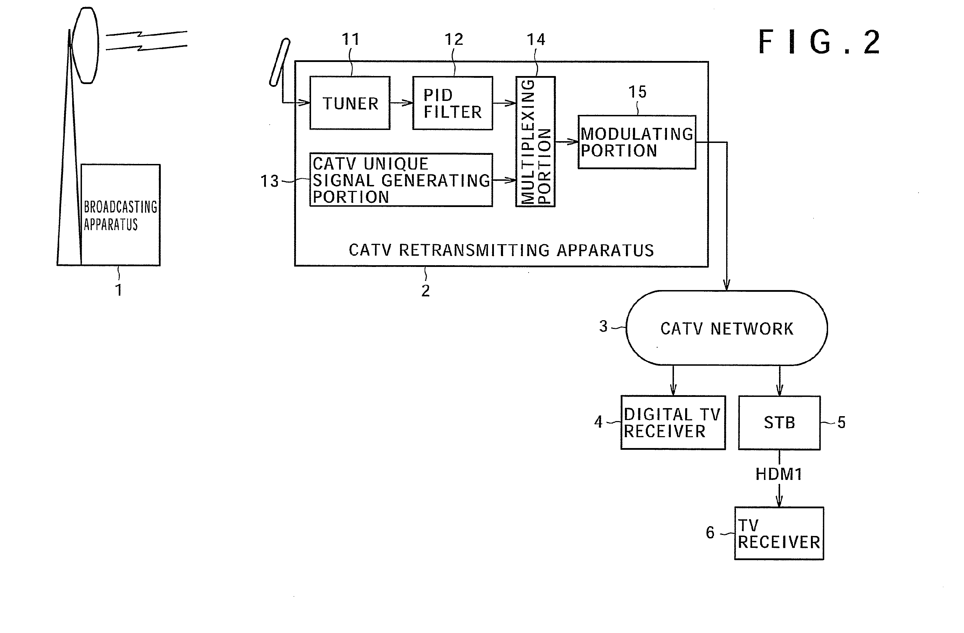

FIG. 2 shows an example of a configuration of a retransmitting system of a digital television program using a CATV network.

The retransmitting system is mainly composed of a broadcasting apparatus 1, a CATV retransmitting apparatus 2, a CATV network 3, a digital television receiver 4, a set top box (STB) 5, and a television receiver 6.

The broadcasting apparatus 1 provided in a broadcasting station or the like broadcasts a digital television broadcasting signal by using either a terrestrial wave or a satellite wave. The CATV retransmitting apparatus 2 provided in a cable TV station or the like receives the digital television broadcasting thus broadcasted to remove unnecessary information, and adds information which is unique to a CATV, thereby retransmitting the resulting digital television broadcasting to the digital television receiver 4, the set top box 5, and the like through the CATV network 3.

The CATV retransmitting apparatus 2 is composed of a tuner 11, a PID filter 12, a CATV unique signal generating portion 13, a multiplexing portion 14, and a modulating portion 15. In this case, the PID filter 12 filters a packet of a predetermined packet ID.

The tuner 11 receives and demodulates the digital television broadcasting signals of respective channels, and outputs the resulting Transport Stream (TS) to the PID filter 12. The PID filter 12 removes a packet (a packet having no relation to the contents as a program) corresponding to a predetermined packet ID from the TS, and outputs the resulting TS to the multiplexing portion 14. The CATV unique signal generating portion 13 generates a packet in which information unique to the CATV station concerned is stored, and outputs the packet thus generated to the multiplexing portion 14. The multiplexing portion 14 multiplexes an output signal from the PID filter 12, and an output signal from the CATV unique signal generating portion 13, and outputs the resulting output signal to the modulating portion 15. The modulating portion 15 modulates the output signal from the multiplexing portion 14 in accordance with a modulation system suitable for the CATV network 3, and retransmits the output signal thus modulated to each of the digital television receiver 4, the set top box 5, and the like through the CATV network 3.

The digital television receiver 4 corresponding to the CATV receives and decodes the TS of the digital television broadcasting thus retransmitted thereto through the CATV network 3, and displays thereon the resulting image and outputs the resulting sound.

The set top box 5 corresponding to the CATV receives and decodes the TS of the digital television broadcasting thus retransmitted thereto through the CATV network 3, and outputs the resulting video signal and audio signal to the television receiver 6 through an HDMI cable or the like. The television receiver 6 displays an image corresponding to the video signal and outputs a sound based on the video signal and the audio signal which are inputted thereto from the set top box 5 through the HDMI cable or the like.

As described above, in the CATV retransmitting apparatus 2, the packet (having no relation to the contents as the program) corresponding to the predetermined packet ID is removed from the TS of the digital broadcasting signal by the PID filter 12. Therefore, even if as shown in (B) of FIG. 1, the band for the broadcasting of the contents for the data broadcasting is ensured in the broadcasting band, it may be caused that the packet in which the contents for the data broadcasting are stored is excluded by the PID filter 12.

The present disclosure has been made in the light of the problems described above, and it is therefore desirable to provide a transmitting apparatus, a transmitting method, a receiving apparatus, a receiving method, a program, and a broadcasting system each of which is capable of realizing contents for a data broadcasting which can be executed in conjunction with a program or a CM of a television broadcasting without providing a band for a data broadcasting in a broadcasting band of a digital television broadcasting.

In order to attain the desire described above, according to an embodiment of the present disclosure, there is provided a transmitting apparatus transmitting contents, including: a trigger information generating section configured to generate trigger information on control for an application program which is executed in conjunction with the contents in a receiving apparatus; an encoding section configured to encode the contents to generate an encoded stream; a multiplexing section configured to multiplex the encoded stream to generate a multiplexed stream; and a sending section configured to send the multiplexed stream, in which the trigger information is sent by carrying out at least one of the encoding with the contents by the encoding section or the multiplexing with the encoded stream by the multiplexing section.

According to another embodiment of the present disclosure, there is provided a transmitting method for use in a transmitting apparatus transmitting contents, including: generating trigger information on control for an application program which is executed in conjunction with the contents in a receiving apparatus by the transmitting apparatus; encoding the contents to generate an encoded stream by the transmitting apparatus; multiplexing the encoded stream to generate a multiplexed stream by the transmitting apparatus; and sending the multiplexed stream by the transmitting apparatus, in which the trigger information is sent by carrying out at least one of the encoding with the contents in the encoding processing, or the multiplexing with the encoded stream in the multiplexing processing.

According to still another embodiment of the present disclosure, there is provided a program controlling a transmitting apparatus transmitting contents, the program causing a computer of the transmitting apparatus to execute processing, including: generating trigger information on control for an application program which is executed in conjunction with the contents in a receiving apparatus; encoding the contents to generate an encoded stream; multiplexing the encoded stream to generate a multiplexed stream; and sending the multiplexed stream, in which the trigger information is sent by carrying out at least one of the encoding with the contents in the encoding processing, or the multiplexing with the encoded stream in the multiplexing processing.

In the embodiment, the another embodiment, and the still another embodiment of the present disclosure, the trigger information on the control for the application program which is executed in conjunction with the contents in the receiving apparatus is sent by carrying out at least one of the encoding with the contents, or the multiplexing with the encoded stream.

According to yet another embodiment of the present disclosure, there is provided a receiving apparatus receiving contents transmitted thereto, including: a receiving section configured to receive a multiplexed stream into which the contents are encoded to be multiplexed; a multiply separating section configured to multiply separate the multiplexed stream; a decoding section configured to decode an encoded stream multiply separated from the multiplexed stream to reproduce the contents; and a control section configured to control processing about an application program which is executed in conjunction with the contents in accordance with trigger information acquired, in which the trigger information is acquired by carrying out at least one of the multiple separation from the multiplexed stream by the multiply separating section, or the decoding from the encoded stream by the decoding section.

According to a further embodiment of the present disclosure, there is provided a receiving method for use in a receiving apparatus receiving contents transmitted thereto, including: receiving a multiplexed stream into which the contents are encoded to be multiplexed by the receiving apparatus; multiply separating the multiplexed stream by the receiving apparatus; decoding an encoded stream multiply separated from the multiplexed stream to reproduce the contents by the receiving apparatus; and controlling processing about an application program which is executed in conjunction with the contents in accordance with trigger information acquired by the receiving apparatus, in which the trigger information is acquired by carrying out at least one of the multiple separation from the multiplexed stream in the multiply separating processing, or the decoding from the encoded stream in the decoding processing.

According to a still further embodiment of the present disclosure, there is provided a program controlling a receiving apparatus receiving contents transmitted thereto, the program causing a computer of the receiving apparatus to execute processing, including: receiving a multiplexed stream into which the contents are encoded to be multiplexed; multiply separating the multiplexed stream; decoding an encoded stream multiply separated from the multiplexed stream to reproduce the contents; and controlling processing about an application program which is executed in conjunction with the contents in accordance with trigger information acquired, in which the trigger information is acquired by carrying out at least one of the multiple separation from the multiplexed stream in the multiply separating processing, or the decoding from the encoded stream in the decoding processing.

In the further embodiment and the still further embodiment of the present disclosure, the processing about the application program which is executed in conjunction with the contents is controlled in accordance with the trigger information acquired. The trigger information is acquired by carrying out at least one of the multiple separation from the multiplexed stream, or the decoding from the encoded stream.

According to a yet further embodiment of the present disclosure, there is provided a broadcasting system including a transmitting apparatus transmitting contents and a receiving apparatus receiving the contents transmitted thereto, in which the transmitting apparatus includes: a trigger information generating section configured to generate trigger information on control for an application program which is executed in conjunction with the contents in a receiving apparatus; an encoding section configured to encode the contents to generate an encoded stream; a multiplexing section configured to multiplex the encoded stream to generate a multiplexed stream; and a sending section configured to send the multiplexed stream, in which the trigger information is sent by carrying out at least one of the encoding with the contents by the encoding section or the multiplexing with the encoded stream by the multiplexing section; and the receiving apparatus includes: a receiving section configured to receive a multiplexed stream; a multiply separating section configured to multiply separate the multiplexed stream; a decoding section configured to decode an encoded stream multiply separated from the multiplexed stream to reproduce the contents; and a control section configured to control processing about an application program which is executed in conjunction with the contents in accordance with trigger information acquired, in which the trigger information is acquired by carrying out at least one of the multiple separation from the multiplexed stream by the multiply separating section, or the decoding from the encoded stream by the decoding section.

In the yet further embodiment of the present disclosure, the trigger information on the control for the application program which is executed in conjunction with the contents in the receiving apparatus is sent by carrying out at least one of the encoding with the contents, or the multiplexing with the encoded stream by the transmitting apparatus. In addition, the processing about the application program which is executed in conjunction with the contents in accordance with the trigger information acquired is controlled by the receiving apparatus. The trigger information is acquired by carrying out at least one of the multiple separation from the multiplexed stream, or the decoding from the encoded stream.

As set forth hereinabove, according to the present disclosure, the receiving side can be instructed to control the contents for the data broadcasting which is executed in conjunction with the program, the CM or the like of the television broadcasting without processing the band for the data broadcasting in the broadcasting band of the digital television broadcasting.

In addition, the contents for the data broadcasting can be controlled in conjunction with the program, the CM or the like of the television broadcasting.

Also, the service of the contents for the data broadcasting which is executed in conjunction with the program, the CM or the like of the television broadcasting can be realized without providing the band for the data broadcasting in the broadcasting band of the digital television broadcasting.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a diagram showing a broadcasting band of a digital television broadcasting;
FIG. 2 is a block diagram showing an example of a configuration of an existing CATV retransmitting system;
FIG. 3 is a block diagram showing a configuration of a broadcasting system according to an embodiment of the present disclosure;
FIG. 4 is a block diagram showing a configuration of a broadcasting apparatus in the broadcasting system according to the embodiment of the present disclosure;
FIG. 5 is a block diagram showing a configuration of a receiving apparatus in the broadcasting system according to the embodiment of the present disclosure;
FIG. 6 is a diagram showing items contained in trigger information of a Pre-cache command;
FIG. 7 is a diagram showing items contained in the trigger information of an Execute command;
FIG. 8 is a diagram showing items contained in the trigger information of an Inject_event command;
FIG. 9 is a diagram showing items contained in the trigger information of a Suspend command;
FIG. 10 is a diagram showing items contained in the trigger information of a Terminate command;
FIG. 11 is a diagram showing an example of a syntax of the trigger information;
FIG. 12 is a diagram explaining an example in which the trigger information is embedded in an MPEG2 video stream to be encoded;
FIG. 13 is a diagram explaining an example in which the trigger information is embedded in an H.264 video stream to be encoded;
FIG. 14 is a diagram explaining an example in which the trigger information is multiplexed into a transport stream;
FIG. 15 is a diagram explaining an example in which the trigger information is multiplexed into an ISO base media file format (MP4);
FIG. 16 is a diagram showing an example of display when an application program is executed in conjunction with processing of a program or a CM;
FIG. 17 is a flow chart explaining trigger information transmitting processing;
FIG. 18 is a flow chart explaining trigger information receiving processing;
FIG. 19 is a flow chart explaining trigger information corresponding processing;
FIG. 20 is a diagram showing an example of an operation scenario of an application program;
FIG. 21 is a state transition diagram of the application program in the receiving apparatus; and
FIG. 22 is a block diagram showing a configuration example of a computer.

An embodiment of the present disclosure will be described in detail hereinafter with reference to the accompanying drawings.

### [Configuration Example of Broadcasting System]

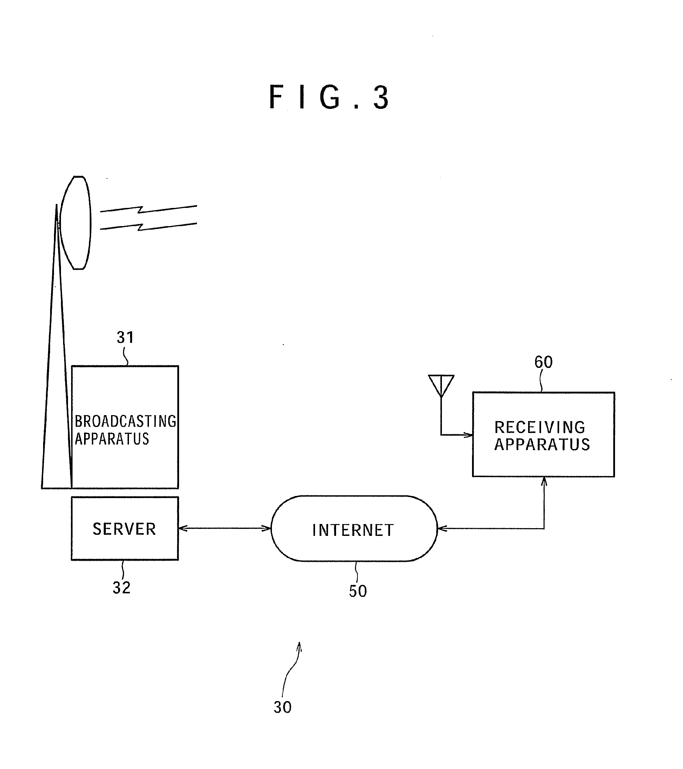

FIG. 3 shows a broadcasting system according to an embodiment of the present disclosure. The broadcasting system 30 realizes contents for a data broadcasting which can be executed in conjunction with a program or a CM in a state in which, for example, like U.S.A. in an actual state, a band for a broadcasting of contents for a data broadcasting is not provided in a broadcasting band of a digital television broadcasting. It is noted that in this specification, a term which is simply referred to as the contents means a so-called program or CM.

It is noted that the application program supplied to a receiving apparatus is realized by being executed by a computer of the receiving apparatus, thereby realizing the contents for the data broadcasting. Therefore, hereinafter, the contents for the data broadcasting will be referred to either as "an application program for a data broadcasting" as well or as "an appli for a data broadcasting" as well.

The broadcasting system 30 is composed of a broadcasting apparatus 31 and a server 32 which are provided on a broadcasting station side, and a receiving apparatus 60 which is provided on a recipient side.

The broadcasting apparatus 31 transmits a broadcasting signal of a digital television broadcasting (hereinafter referred to as "a digital television broadcasting signal"). In addition, the broadcasting apparatus 31 transmits trigger information as a command to instruct acquisition or execution of the contents for the data broadcasting which is executed in conjunction with a program or a CM in the form of being contained in the digital television broadcasting signal. Specifically, the trigger information is transmitted in the form of being embedded in an encoded video stream or in the form of being multiplexed with the encoded video stream or the like.

In addition to information representing a kind of command, information for specifying the contents for the data broadcasting as an object of acquisition or execution, that is, an application program, and the like are contained in the trigger information. Details of the trigger information will be described later.

The server 32 responds to a request made from the receiving apparatus 60 which has accessed the server 32 through the Internet 50, and supplies the contents for the data broadcasting (application program) to the receiving apparatus 60.

The receiving apparatus 60 receives the digital television broadcasting signal broadcasted from the broadcasting apparatus 31, and carries out demodulation, decoding and the like for the digital television broadcasting signal, thereby outputting an image and a sound of the contents (such as the television program or the CM) to a monitor (not shown). In addition, the receiving apparatus 60 accesses the server 32 through the Internet 50 to acquire the contents for the data broadcasting. It is noted that the receiving apparatus 60 may exist in the form of a single body or, for example, may be built in a television receiver, a video recorder or the like.

### [Configuration Example of Broadcasting Apparatus]

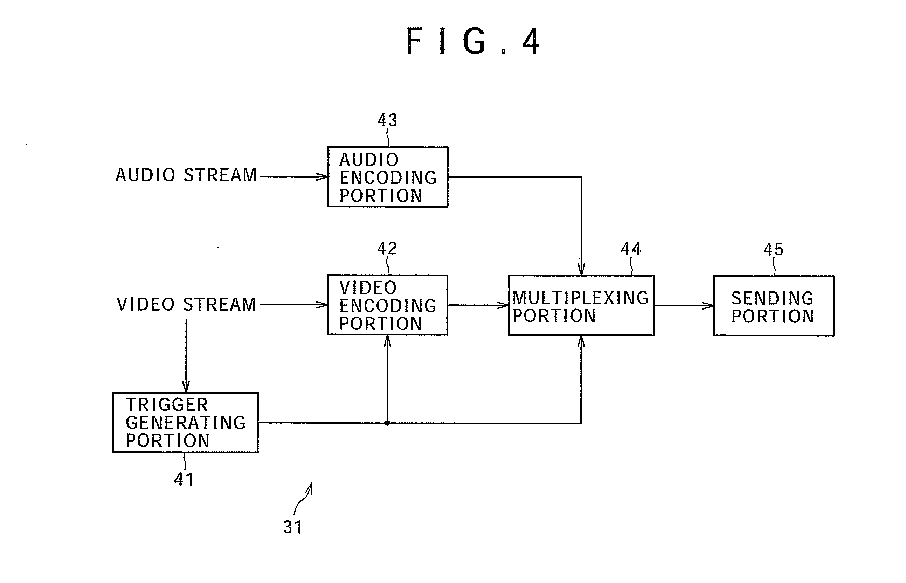

FIG. 4 shows a configuration of the broadcasting apparatus 31. The broadcasting apparatus 31 is composed of a trigger generating portion 41, a video encoding portion 42, an audio encoding portion 43, a multiplexing portion 44, and a sending portion 45.

The trigger generating portion 41 generates trigger information in time with the proceeding of a video stream of a program or a CM inputted thereto from a preceding stage. Also, the trigger generating portion 41 outputs the trigger information thus generated to each of the video encoding portion 42 and the multiplexing portion 44.

The video encoding portion 42 embeds the trigger information supplied thereto from the trigger generating portion 41 in the video stream of the program or the CM inputted thereto from a preceding stage when it encodes the video stream in accordance with a predetermined encoding system, and encodes the video stream having the trigger information thus embedded therein. Also, the video encoding portion 42 outputs the resulting encoded video stream to the multiplexing portion 44. An MPEG2 system, an H.264 system or the like, for example, can be given as the encoding system utilized in the video encoding portion 42.

The audio encoding portion 43 encodes an audio stream corresponding to the video stream inputted to the video encoding portion 42 in accordance with a predetermined encoding system. Also, the audio encoding portion 43 outputs the resulting encoded audio stream to the multiplexing portion 44.

The multiplexing portion 44 multiplexes the encoded video stream inputted thereto from the video encoding portion 42, the encoded audio stream inputted thereto from the audio encoding portion 43, and the trigger information inputted thereto from the trigger information generating portion 41. Also, the multiplexing portion 44 outputs the resulting multiplexed stream to the sending portion 45. Specifically, for example, the multiplexing portion 44 multiplexes the encoded video stream, the encoded audio stream and the trigger information into a Transport Stream (TS). Alternatively, in consideration of network delivery of the digital television broadcasting, the multiplexing portion 44 may multiplex the encoded video stream, the encoded audio stream and the trigger information into an ISO base media file format (MP4) suitable for the network delivery.

The sending portion 45 sends the multiplexed stream inputted thereto from the multiplexing portion 44 in the form of the digital television broadcasting signal.

It is noted that although in the above description, the trigger information is embedded in the video stream, and is also multiplexed into the multiplexed stream, one of the embedding or the multiplexing may be carried out.

### [Configuration Example of Receiving Apparatus]

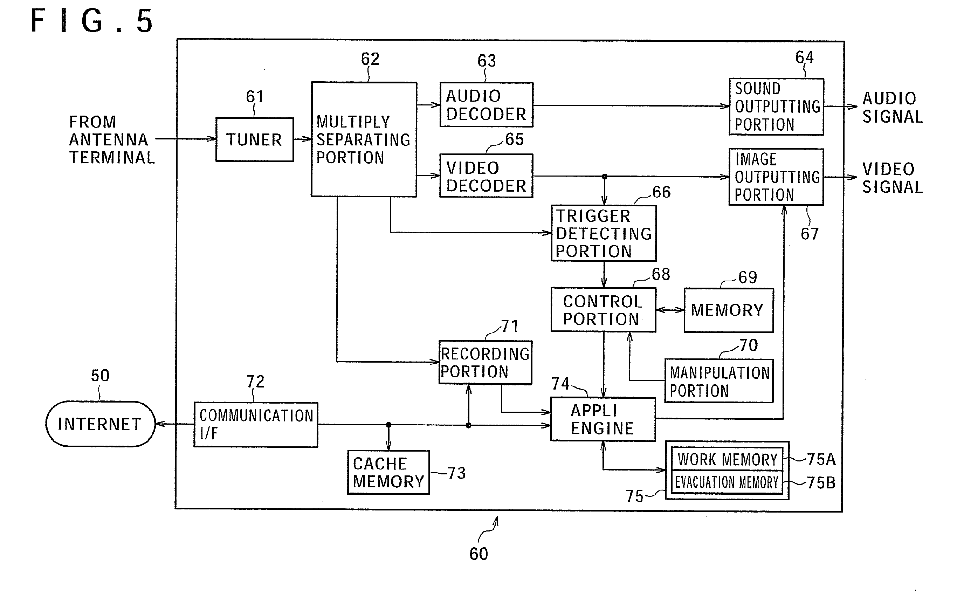

FIG. 5 shows a configuration of the receiving apparatus 60. The receiving apparatus 60 is composed of a tuner 61, a multiply separating portion 62, an audio decoder 63, a sound outputting portion 64, a video decoder 65, a trigger detecting portion 66, and an image outputting portion 67. Also, the receiving apparatus 60 is composed of a control portion 68, a memory 69, a manipulation portion 70, a recording portion 71, a communication interface (I/F) 72, a cache memory 73, an appli engine 74, and a memory 75 for an appli.

The tuner 61 receives and demodulates the digital television broadcasting signal corresponding to a channel selected by a user, and outputs the resulting multiplexed stream to the multiply separating portion 62. The multiply separating portion 62 multiply separates the multiplexed stream inputted thereto from the tuner 61 into an encoded audio stream, an encoded video stream, and a control signal. Also, the multiply separating portion 62 outputs the encoded audio stream, the encoded video stream, and the control signal obtained through the multiple separation to the audio decoder 63, the video decoder 65, and the control portion 68, respectively.

In addition, the multiply separating portion 62 multiply separates the trigger information multiplexed in the multiplexed stream from the multiplexed stream, and outputs the trigger information to the trigger detecting portion 66.

The audio decoder 63 decodes the encoded audio stream inputted thereto from the multiply separating portion 62, and outputs the resulting audio stream (audio signal) to the sound outputting portion 64. The sound outputting portion 64 outputs the audio signal inputted thereto from the audio decoder 63 to a subsequent stage (such as a speaker).

The video decoder 65 decodes the encoded video stream inputted thereto from the multiply separating portion 62, and outputs the resulting video stream (video signal) to each of the trigger detecting portion 66 and the image outputting portion 67.

The trigger detecting portion 66 detects the trigger information embedded in the video stream inputted thereto from the video decoder 65, and outputs the trigger information thus detected to the control portion 68. In addition, the trigger detecting portion 66 outputs the trigger information inputted thereto from the multiply separating portion 62 to the control portion 68. It is noted that the trigger detecting portion 66 may be omitted, the trigger information may be extracted from the video stream in the video decoder 65, and may be outputted to the control portion 68. In this case, the trigger information multiply separated in the multiply separating portion 62 is also directly outputted to the control portion 68.

The image outputting portion 67 outputs the video signal inputted thereto from the video decoder 65 to a subsequent stage (such as a display device). In addition, the video outputting portion 67 synthesizes an image of the contents for the data broadcasting inputted thereto from the appli engine 74, and a video signal inputted thereto from the video decoder 65, and outputs the resulting signal to the subsequent stage.

The control portion 68 controls the entire receiving apparatus 60 by executing a program for control recorded in the memory 69. In addition, the control portion 68 controls acquisition, activation, event firing, suspend, termination and the like of the application program for the data broadcasting in accordance with the trigger information inputted thereto from the trigger detecting portion 66.

A program for control which is to be executed by the control portion 68 is recorded in the memory 69. The program for control can be updated based on the digital television broadcasting signal, or update data acquired through the Internet 50. The manipulation portion 70 receives various kinds of manipulations made by the user, and informs the control portion 68 of manipulation signals corresponding to the various kinds of manipulations, respectively.

The recording portion 71 holds the application program for the data broadcasting which is downloaded when the application program for the data broadcasting is delivered by using the digital television broadcasting signal in a recording medium built therein.

The communication I/F 72 is connected to the server 32 through the Internet 50 in accordance with the control made by the appli engine 74. The appli engine 74 acquires the application program for the data broadcasting from the server 32 through both of the communication I/F 72 and the Internet 50 and causes the cache memory 73 to hold therein the application program for the data broadcasting in accordance with the control made by the control portion 68.

The appli engine 74 reads out and executes the application program for the data broadcasting which is held either in the recording portion 71 or in the cache memory 73 in accordance with the control made by the control portion 68.

The memory 75 for the appli is composed of a work memory 75A and an evacuation memory 75B. The appli engine 74 records data on the application program for the data broadcasting being executed (specifically, containing a hierarchy of information being displayed) in the work memory 75A. In addition, when the application program for the data broadcasting being executed is suspended, the appli engine 74 moves the data stored in the work memory 75A of the memory 75 for the appli to the evacuation memory 75B. Also, when the application program for the data broadcasting thus suspended is restarted, the data stored in the evacuation memory 75B is moved to the work memory 75A to restore the state before the suspend.

It is noted that of two areas having the same size in the memory 75 for the appli, changeover may be alternately carried out in such a way that one of the two areas is used as the work memory 75A, and the other is used as the evacuation memory 75B. As a result, the data is prevented from being moved between the work memory 75A and the evacuation memory 75B.

### [Details of Trigger Information]

Next, details of the trigger information will be described. The trigger information is repetitively transmitted plural times with the same contents in a state of being contained (embedded or multiplexed) in the digital television broadcasting signal in consideration of a radio disturbance and an unexpected defeat (reception mistake) in the receiving apparatus 60.

The trigger information is classified into five kinds in correspondence to the command shown thereby: Pre_cache, Execute, Inject_event, Suspend, and Terminate.

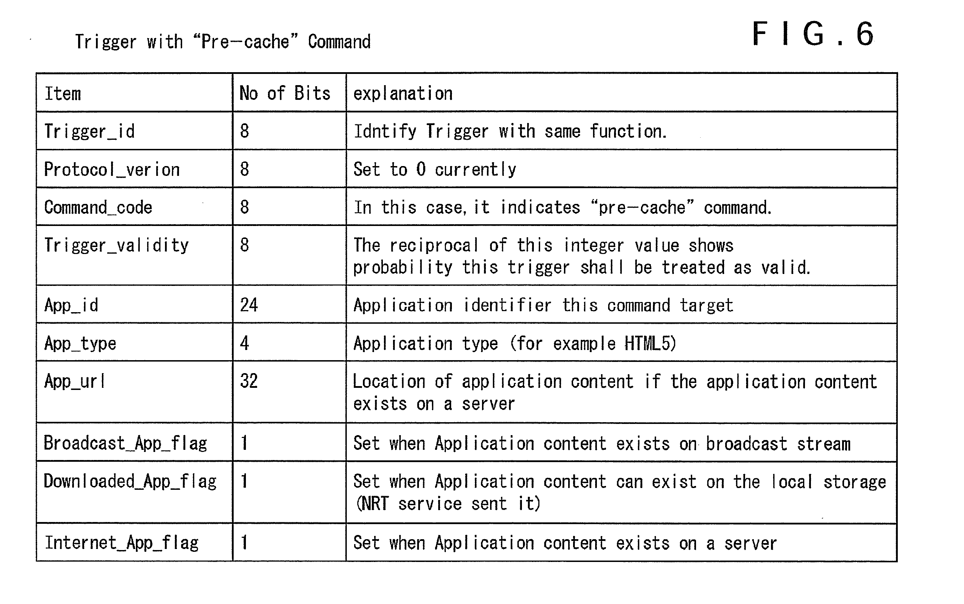

FIG. 6 shows items contained in the trigger information as a Pre-cache command. The Pre-cache command is a command to instruct the receiving apparatus 60 to acquire the appli for the data broadcasting.

Trigger_id is information for identification of the trigger information concerned. Although the trigger information is normally transmitted plural times with the same contents, Trigger_id of each trigger information transmitted plural times become identical. Protocol_version represents a version of a protocol of the trigger information concerned. Command_code represents a kind of a command of the trigger information concerned. In the case shown in FIG. 6, information representing the Pre_cache command is described.

Trigger_validity is a value representing a probability at which each of the receiving apparatuses 60 which have received the trigger information executes processing in accordance with the trigger information concerned. Setting of this value results in that when plural receiving apparatuses 60 acquire the appli for the data broadcasting from the server 32, accesses by the plural receiving apparatuses 60 can be dispersed without concentrating on one time.

App_id is identification information of the appli for the data broadcasting to be acquired so as to correspond to the trigger information. App_type is information representing a type (such as an HTML5 or a java) of the appli for the data broadcasting corresponding to the trigger information. Also, App_url is a URL of an acquisition destination (the server 32 in this case) of the appli for the data broadcasting.

Broadcast_App_flag, Downloaded_App_flag, and Internet_App_flag are flags representing the respective places where the program data of the appli for the data broadcasting corresponding to the trigger information concerned is kept. Broadcast_App_flag is set to 1 when the appli for the data broadcasting corresponding to the trigger information concerned can be acquired from the digital television broadcasting signal. Downloaded_App_flag is set to 1 when the appli for the data broadcasting corresponding to the trigger information concerned is previously downloaded and can be acquired from a local storage (such as the recording portion 71). Internet_App_flag is set to 1 when the appli for the data broadcasting corresponding to the trigger information concerned can be acquitted from the server 32 through the Internet 50.

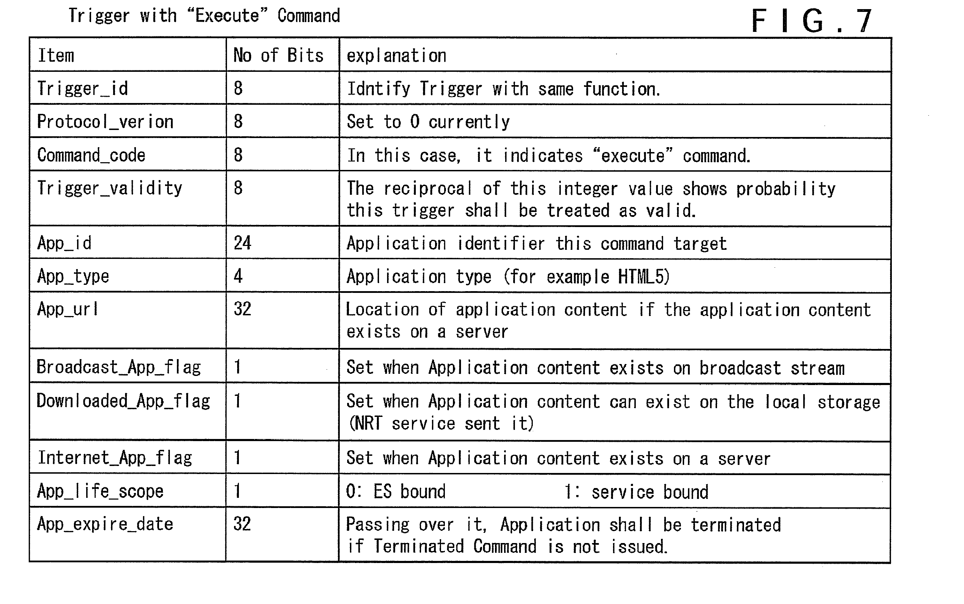

FIG. 7 shows items contained in the trigger information as an Execute command. The Execute command is a command to instruct the receiving apparatus 60 to activate the appli for the data broadcasting.

Trigger_id, Protocol_version, Command_code, Trigger_varidity, App_id, App_type, App_url, Broadcast_App_flag, Downloaded_App_flag, and Internet_App_flag are the same as those in the case of the trigger information as the Pre_cache command shown in FIG. 6. However, information representing that a command is the Execute command is recorded in Command_code.

App_life_scope represents whether or not the appli for the data broadcasting is ended in accordance with view changeover, channel changeover or the like within the same channel. App_expire_date represents the date and time at which the appli for the data broadcasting being executed will be ended even when a Terminate command (which will be described later) is not received.

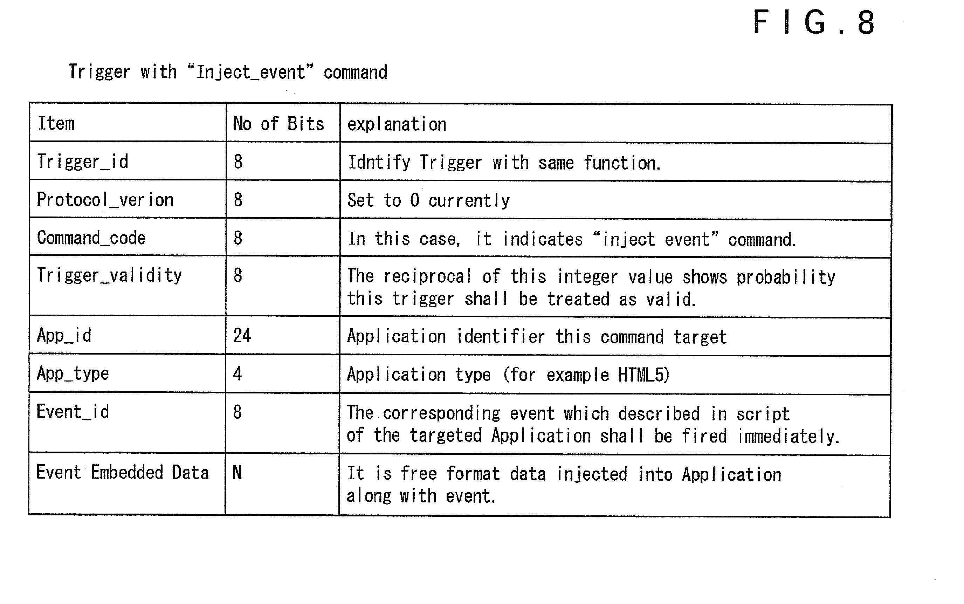

FIG. 8 shows items contained in the trigger information as the Inject_event command. The Inject_event command is a command to instruct the receiving apparatus 60 to fire an event in the appli for the data broadcasting being executed.

Trigger_id, Protocol_version, Command_code, Trigger_varidity, App_id, and App_type are the same as those in the case of the trigger information as the Pre_cache command shown in FIG. 6. However, information representing that a command is the Inject_event command is described in Command_code.

Event_id is identification information of an event which is to be fired in the appli for the data broadcasting specified by App_id. Data which is referred when the event is fired is described in Event Embedded Data.

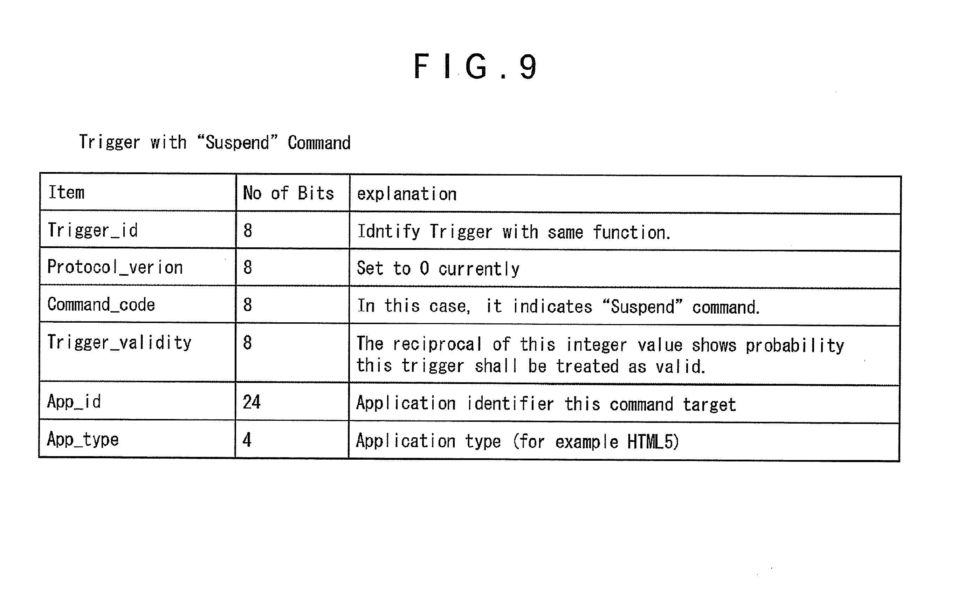

FIG. 9 shows items contained in the trigger information as a Suspend command. The Suspend command is a command to instruct the receiving apparatus 60 to suspend the appli for the data broadcasting being executed.

Trigger_id, Protocol_vesion, Command_code, Trigger_varidity, App_id, and App_type are the same as those in the case of the trigger information as the Pre_cache command shown in FIG. 6. However, information representing that a command is the Suspend command is described in Command_code.

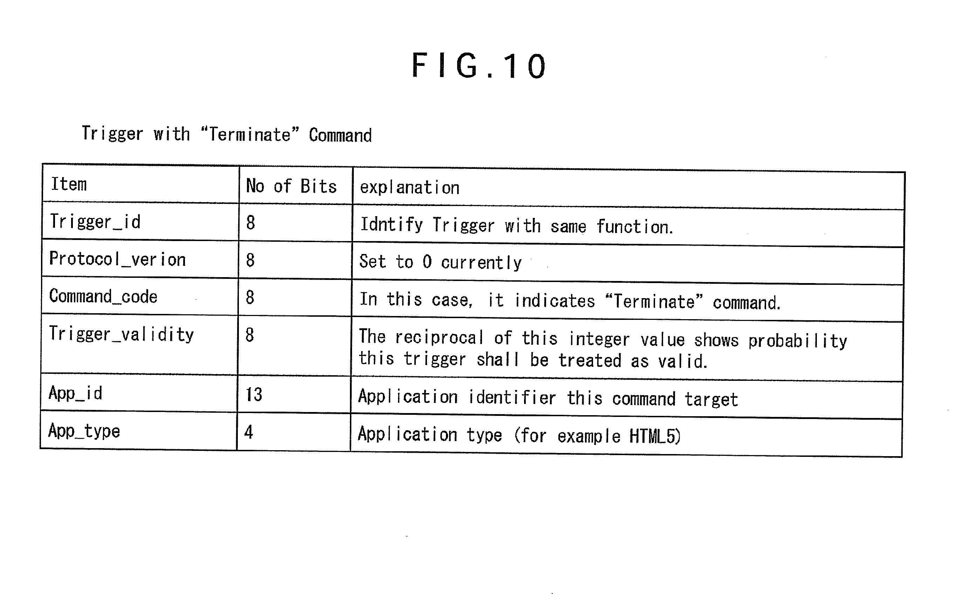

FIG. 10 shows items contained in the trigger information as a Terminate command. The Terminate command is a command to instruct the receiving apparatus 60 to end the appli for the data broadcasting being executed.

Trigger_id, Protocol_version, Command_code, Trigger_varidity, App_id, and App_type are the same as those in the case of the trigger information as the Pre__cache command shown in FIG. 6. However, information representing that a command is the Terminate command is described in Command_code.

### [Syntax of Trigger Information]

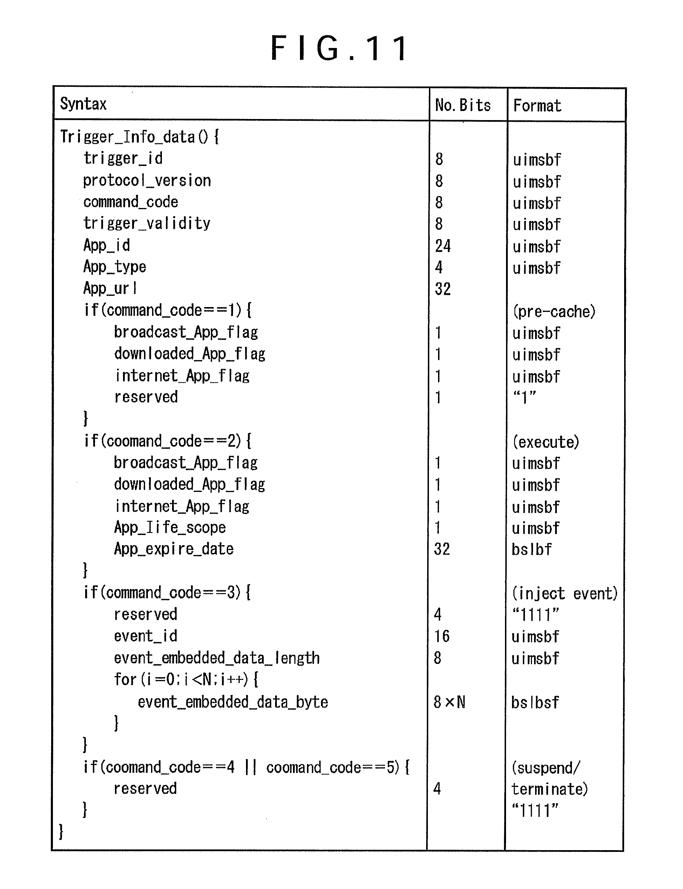

FIG. 11 shows an example of a syntax of the trigger information which can correspond to the trigger information as each of the commands described above. It is noted that the syntax of the trigger information is arbitrary, and thus is by no means limited to the syntax shown in FIG. 11.

### [Case where Trigger Information is Embedded in MPEG2 Encoded Video Stream]

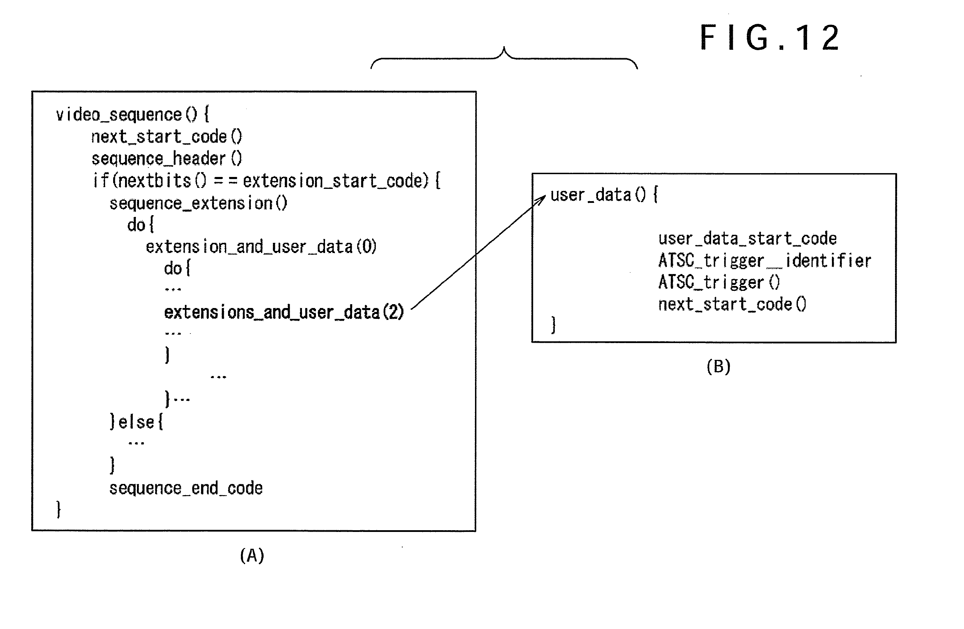

FIG. 12 shows the case where the trigger information is embedded in the MPEG2 encoded video stream.

In this case, user_data in a picture layer within video_sequence defined by MPEG2 video shown in (A) of FIG. 12 is utilized, and the trigger information is described in the manner as shown in (B) of FIG. 12. Specifically, the syntax shown in FIG. 11 is described in a position of ATSC_trigger () in (B) of FIG. 12.

### [Case where Trigger Information is Embedded in H.264 Encoded Video Stream]

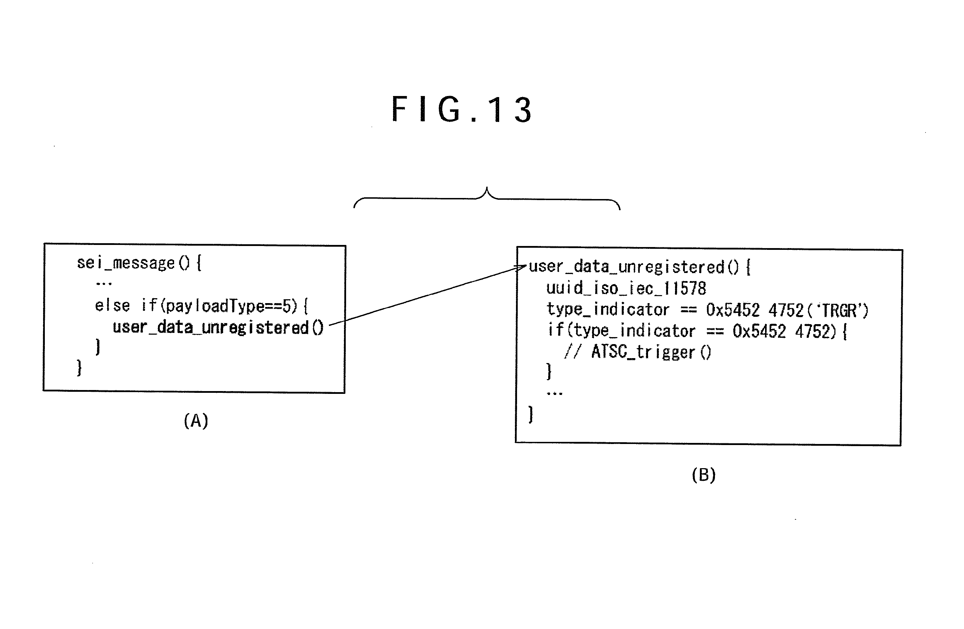

FIG. 13 shows the case where the trigger information is embedded in an H.264 encoded video stream.

In this case, user_data of H.264 Supplementary Enhancement Information (SEI) shown in (A) of FIG. 13 is utilized, and the trigger information is described in the manner as shown in (B) of FIG. 13. Specifically, the syntax shown in FIG. 11 is described in a position in and after ATSC_Trigger() in (B) of FIG. 13.

### [Case where Trigger Information is Multiplexed into Transport Stream (TS)]

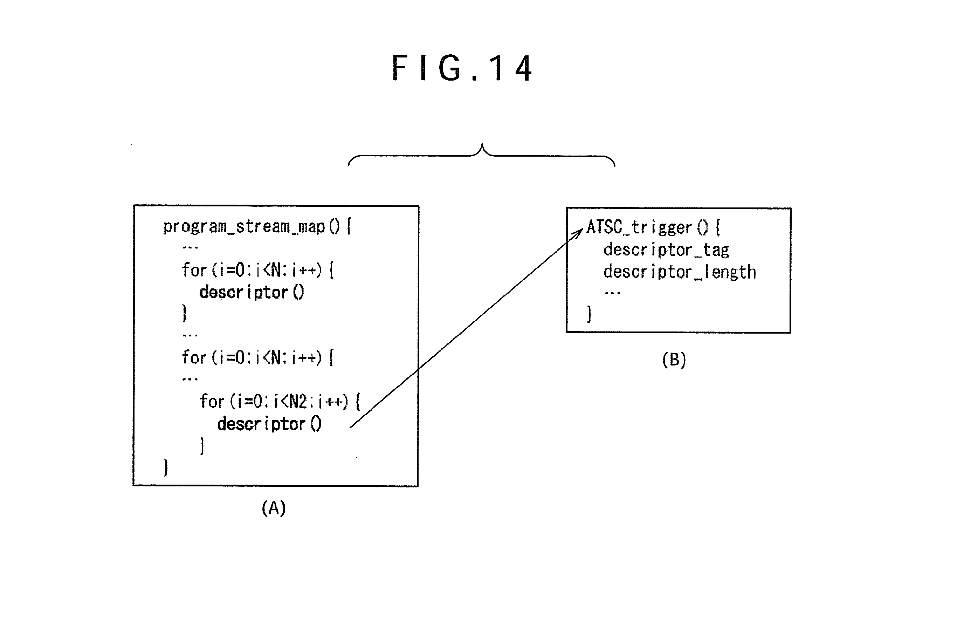

FIG. 14 shows the case where the trigger information is multiplexed into the TS.

In this case, as shown in (A) of FIG. 14, a descriptor of the trigger information is defined in a Program Map Table (PMT) of the TS, and the trigger information is described in the manner as shown in (B) of FIG. 14. Specifically, the syntax shown in FIG. 11 is described in a position in and after the descriptor_length in (B) of FIG. 14.

It is noted that the descriptor of the trigger information may be defined not in PMT descriptor, but, for example, in a Selection Information Table (SIT) descriptor.

### [Case where Trigger Information is Multiplexed in Accordance with Base Media File Format (MP4)]

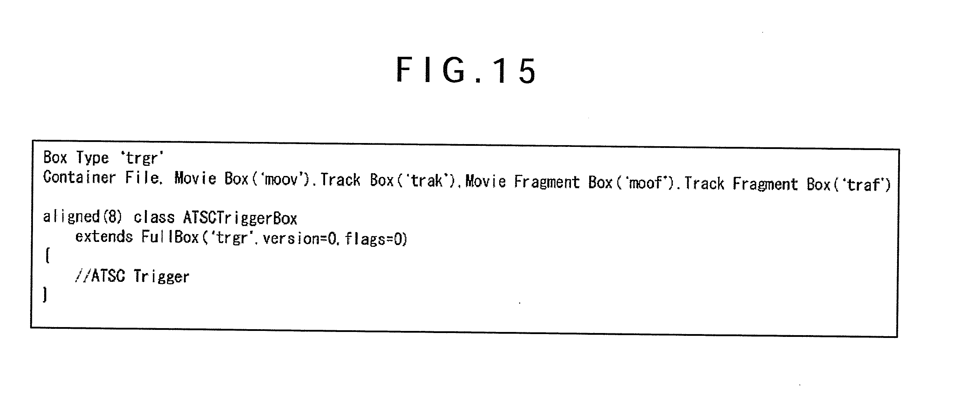

FIG. 15 shows the case where the trigger information is multiplexed in an MP4 file in accordance with an ISO base media file format.

In this case, a disposition of the trigger information within the MP4 file may be any of File, Movie, Trak, Movie Fragment, or Track Fragment. Thus, as shown in FIG. 15, Box corresponding to the trigger information is defined. Also, the syntax shown in FIG. 11 is described in a position of //ATSC Trigger.

As has been described, the trigger information is embedded in the encoded video stream, or is multiplexed into the multiplexed stream, thereby making it possible to inform the receiving apparatus (the digital television receiver 4 as well shown in FIG. 2) utilizing the CATV network as well as shown in FIG. 2 of the trigger information.

### [Description of Operation]

Next, an operation of the broadcasting system 30 will be described.

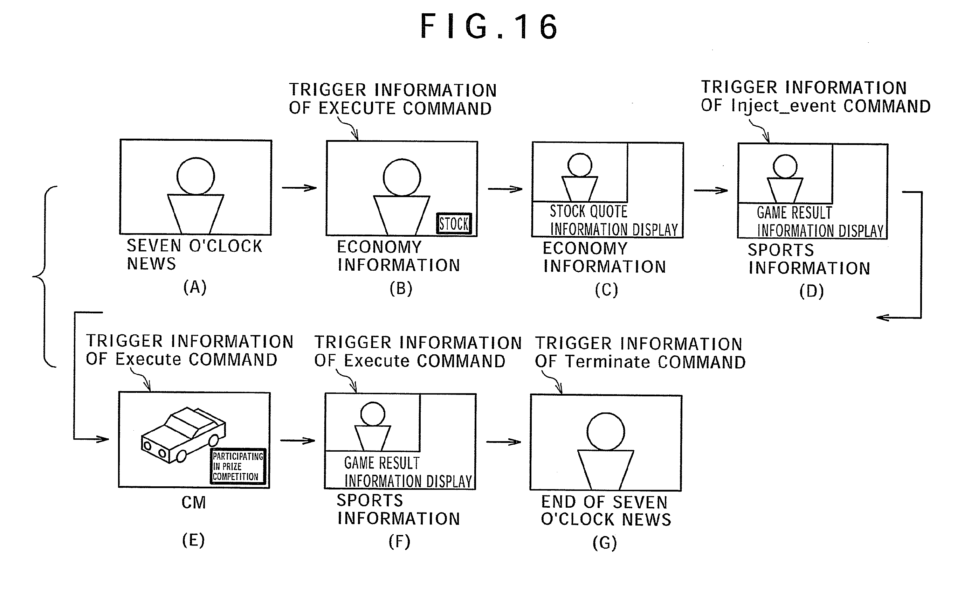

FIG. 16 shows a transition of a display secreen on the receiving apparatus 60 when the receiving apparatus 60 is caused to execute the corresponding appli for the data broadcasting such as the television program or the CM.

For example, as shown in (A) of FIG. 16, when a television program ("seven o'clock news in this case) is broadcasted, and the contents of the program is then shifted to economy information, the trigger information of an Execute command for the appli for the data broadcasting corresponding to the program is transmitted in time with the program shift. When the trigger information is received, the appli for the data broadcasting is activated. Thus, as shown in (B) of FIG. 16, an icon ("stock" in this case) for urging the user to display the appli for the data broadcasting is displayed on the screen in which the program is displayed.

When the user selects this icon, as shown in' (C) of FIG. 16, the display (stock quote information display in this case) by the appli for the data broadcasting is carried out on the picture. In such a way, only when the icon for urging the user to display the appli for the data broadcasting is displayed, the display by the appli for the data broadcasting is carried out. Therefore, it is possible to prevent the user who does not require the display by the appli for the data broadcasting from being bothered.

When the contents of the program are further shifted (shifted to sport information in this case) the trigger information of the Inject_event command is transmitted in time with the program shift. When the trigger information is received, the event is fired, and, for example, the display by the appli for the data broadcasting on the picture is changed as shown in (D) of FIG. 16 (changed to game result information display in this case).

Also, when the trigger information of the Suspend command for the appli for the data broadcasting being executed and corresponding to the program is transmitted, and is then received, the appli for the data broadcasting corresponding to the program is suspended. After that, when the trigger information of the Execute command for the appli for the data broadcasting corresponding to the CM is transmitted, and is then received, the appli for the data broadcasting of the CM program is activated. As a result, as shown in (E) of FIG. 16, an icon ("participating in prize competition" in this case) for urging the user to display the appli for the data broadcasting corresponding to the CM is displayed on the screen in which the CM is being displayed.

When the user selects this icon, the display (the display for participating in prize competition in this case) by the appli for the data broadcasting corresponding to the CM is carried out on the screen.

After end of the CM, when the trigger information of the Execute command for the appli for the data broadcasting corresponding to the program is transmitted in time with the restart of the program and is then received, as shown in (F) of FIG. 16, the display of the appli for the data broadcasting corresponding to the CM is deleted. Thus, the display of the appli for the data broadcasting of the program is also restarted from a state in which it had earlier been suspended.

Also, when after end of the program, the trigger information of the Terminate command for the appli for the data broadcasting corresponding to the program is transmitted in time with the end of the program, and is then received, as shown in (G) of FIG. 16, the display of the appli for the data broadcasting is deleted from the screen, and only the image of the program is displayed.

It is noted that with regard to the display of the appli for the data broadcasting, as shown in FIG. 16, in addition to a method in which the display of the program is reduced to provide an area for display of the appli for the data broadcasting, for example, the display of the appli for the data broadcasting may be superimposed on the display of the program.

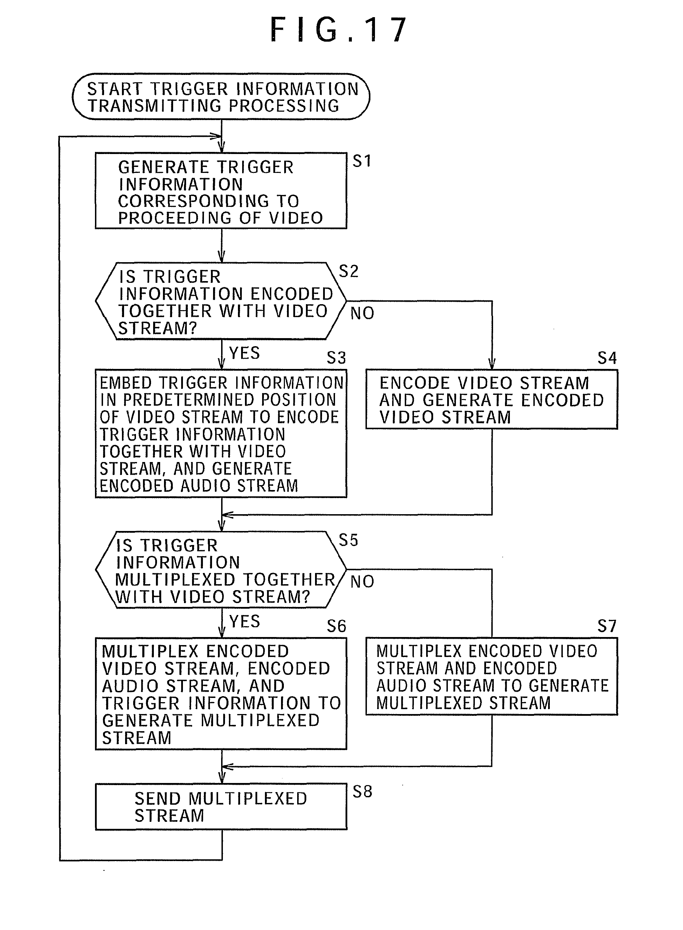

Next, a description will be given with respect to processing when the broadcasting apparatus 31 transmits the trigger information in a state in which the trigger information is contained in the digital television broadcasting signal (hereinafter simply referred to as "the trigger information transmitting processing") with reference to FIG. 17.

FIG. 17 is a flow chart explaining the trigger information transmitting processing.

In Step S1, the trigger generating portion 41 of the broadcasting apparatus 31 generate the trigger information made to correspond to the proceeding of the video stream of the program or the CM inputted thereto from the preceding stage, and outputs the trigger information thus generated to each of the video encoding portion 42 and the multiplexing portion 44.

In Step S2, the video encoding portion 42 determines whether or not the trigger information sent thereto from the trigger generating portion 41 is encoded together with the video stream in accordance with the previously set instruction from the user.

When it is determined in Step S2 that the trigger information sent from the trigger generating portion 41 is encoded together with the video stream, the operation proceeds to processing in Step S3. In Step S3, the video encoding portion 42 embeds the trigger information from the trigger generating portion 41 in the video stream of the program or the CM inputted thereto from the preceding stage to encode the trigger information together with the video stream. Then, the video encoding portion 42 outputs the resulting encoded video stream to the multiplexing portion 44. After that, the operation proceeds to processing in Step S5.

It is noted that it is determined in Step S2 that the trigger information from the trigger generating portion 41 is not, encoded together with the video stream, the operation proceeds to processing in Step S4. In Step S4, the video encoding portion 42 encodes the video stream of the program or the CM inputted thereto from the preceding stage, and outputs the resulting encoded video stream to the multiplexing portion 44. After that, the operation proceeds to the processing in Step S5.

In Step S5, the multiplexing portion 44 determines whether or not the trigger information from the trigger generating portion 41 is multiplexed with the encoded video stream and the like in accordance with the previously set instruction from the user.

When it is determined in Step S5 that the trigger information from the trigger generating portion 41 is multiplexed with the encoded video stream and the like, the operation proceeds to processing in Step S6. In Step S6, the multiplexing portion 44 multiplexes the encoded video stream inputted thereto from the preceding stage, the encoded audio stream, and the trigger information, and sends the resulting multiplexed stream to the sending portion 45.

It is noted that it is determined in Step S5 that the trigger information from the trigger generating portion 41 is not multiplexed with the encoded video stream and the like, the operation proceeds to processing in Step S7. In Step S7, the multiplexing portion 44 multiplexes the encoded video stream inputted thereto from the preceding state, and the encoded audio stream, and outputs the resulting multiplexed stream to the sending portion 45.

In Step S8, the sending portion 45 sends the multiplexed stream inputted thereto from the multiplexing portion 44 in the form of the digital television broadcasting signal. After that, the operation is returned back to the processing in Step S1, and the predetermined pieces of processing in and after the processing in Step S1 are repetitively executed. With that, the description of the trigger information transmitting processing is ended.

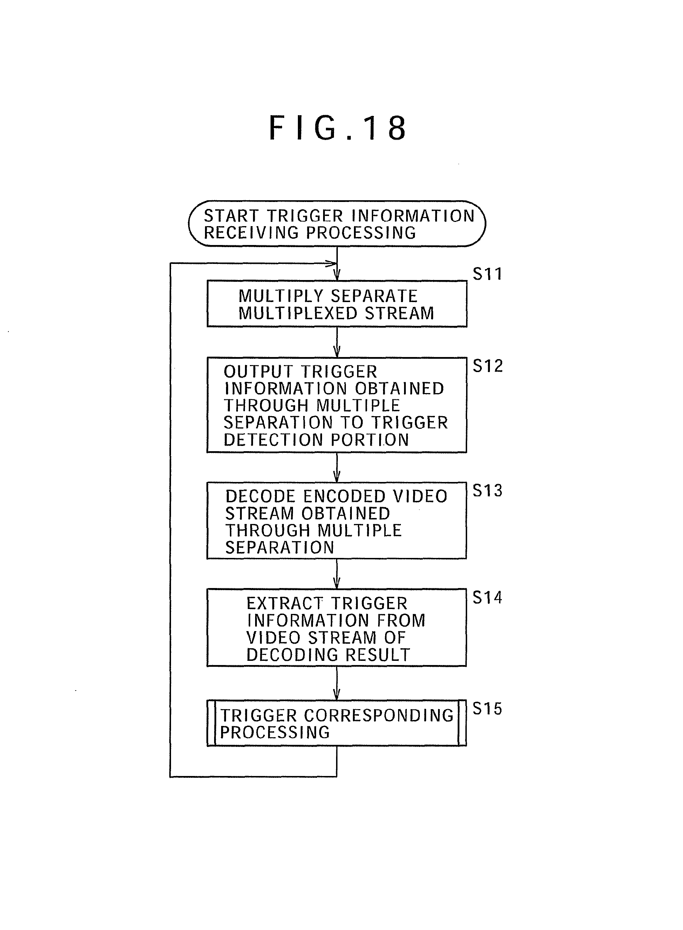

Next, a description will be given with respect to processing when the digital television broadcasting signal containing therein the trigger information is received (hereinafter referred to as "the trigger information receiving processing") by the receiving apparatus 60 with reference to FIG. 18.

FIG. 18 is a flow chart explaining the trigger information receiving processing. It is noted that in the following description, only the operation relating to the trigger information will be described, and the description of the operation, for example, relating to the audio stream and the like will be suitably omitted.

The trigger information receiving processing is repetitively executed, for example, when the user views and listens to the television broadcasting, that is, while the digital television signal is received.

In Step S11, the multiply separating portion 62 of the receiving apparatus 60 multiply separates the multiplexed stream inputted thereto from the tuner 61. Also, in Step S12, the multiply separating portion 62 outputs the encoded audio stream, the encoded video stream, and the control signal which have been multiply separated from the multiplexed stream to the audio decoder 63, the video recorder 65, and the control portion 68, respectively, and outputs the trigger information obtained through the separation to the trigger detecting portion 66.

In Step S13, the video decoder 65 decodes the encoded video stream inputted thereto from the multiply separating portion 62, and outputs the resulting video stream (video signal) to each of the trigger detecting portion 66 and the image outputting portion 67.

In Step S14, the trigger detecting portion 66 detects the trigger information embedded in the video stream inputted thereto from the video decoder 65, and outputs the trigger information thus detected to the control portion 68. In addition, the trigger detecting portion 66 outputs the trigger information inputted thereto from the multiply separating portion 62 to the control portion 68.

In Step S15, the control portion 68 executes processing corresponding to the trigger information inputted thereto from the trigger detecting portion 66 (hereinafter referred to as "the trigger information corresponding processing"). After that, the operation is returned back to the processing in Step S11, and the predetermined pieces of processing in and after the processing in Step S11 are repetitively executed.

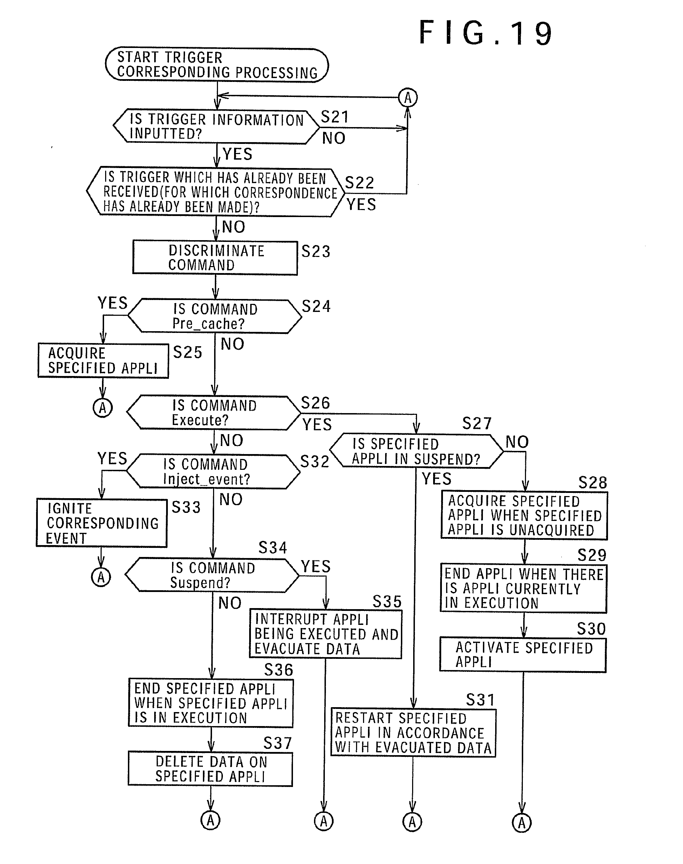

FIG. 19 is a flow chart explaining the trigger information corresponding processing in detail.

In Step S21, the control portion 68 waits until the trigger information is inputted from the trigger detecting portion 66. Also, when the trigger information inputted to the control portion 68, the operation proceeds to processing in Step S22.

In Step S22, the control portion 68 reads out Trigger_id of the trigger information, and determines whether or not predetermined pieces of processing in and after the processing in Step S23 have already been executed for the trigger information concerned. When it is determined in Step S22 that the predetermined pieces of processing in and after the processing in Step S23 have already been executed for the trigger information concerned, the operation is returned back to the processing in Step S21, and the predetermined pieces of processing in and after the processing in Step S21 are repetitively executed. On the other hand, when it is judged in Step S22 that the predetermined pieces of processing in and after the processing in Step S23 have not yet been executed for the trigger information concerned, the operation proceeds to the processing in Step S23.

In Step S23, the control portion 68 reads out Command_code of the trigger information, and discriminates whether the command represented by the trigger information concerned is Pre_cache, Execute, Inject_event, Suspend, or Terminate.

In Step S24, the control portion 68 determines whether or not the discrimination result in Step S23 is Pre_cache. When it is determined in Step S24 that the discrimination result in Step S23 is Pre_cache (YES), the operation proceeds to processing in Step S25.

In Step S25, the program data of the appli for the data broadcasting specified by App_id of the trigger information concerned is acquired. Specifically, when Broadcast_App_flag of the trigger information concerned is 1, the program data of the appli for the data broadcasting specified by App_id is acquired from the television broadcasting signal, and is then recorded in the recording portion 71. When Downloaded_App_flag of the trigger information concerned is 1, the program data of the appli for the data broadcasting specified by App_id is acquired from the recording portion 71 as the local storage. When Internet_App_flag of the trigger information concerned is 1, the program data of the appli for the data broadcasting specified by App_id is acquired from the server 32 through the Internet 50, and is then recorded in the cache memory 73. It is noted that of Broadcast_App_flag, Downloaded_App_flag, and Internet_App_flag, two or more flags are 1, the program data of the appli for the data broadcasting specified by App_id of the trigger information concerned can be acquired in correspondence to the convenience on the receiving apparatus 60 side. After that, the operation is returned back to the processing in Step S21, and the predetermined pieces of processing in and after the processing in Step S21 are repetitively executed.

When it is determined in Step S24 that the discrimination result in Step S23 is not Pre_cache, the operation proceeds to processing in Step S26. In Step S26, the control portion 68 determines whether or not the discrimination result in Step S23 is Execute. When it is determined in Step S26 that the discrimination result in Step S23 is Execute, the operation proceeds to processing in Step S27.

In Step S27, the appli engine 74 determines whether or not the appli for the data broadcasting specified by App_id of the trigger information concerned is in suspend (in a suspend state) in accordance with the control made by the control portion 68. Specifically, the appli for the data broadcasting specified by App_id is determined to be in suspend when the data representing the suspend state is evacuated to the evacuation memory 75B.

When it is determined in Step S27 that the appli for the data broadcasting specified by App_id of the trigger information concerned is not in suspend, the operation proceeds to processing in Step S28. In Step S28, the appli engine 74 acquires the program data of the appli for the data broadcasting specified by App_id when the program data concerned is un-acquired (absent either in the recording portion 71 or in the cache memory 73) in accordance with the control made by the control portion 68.

In Step S29, when there is the appli for the data broadcasting which is currently in execution, the appli engine 74 ends the appli for the data broadcasting concerned in accordance with the control made by the control portion 68.

In Step S30, the appli engine 74 activates the appli for the data broadcasting specified by App_id in accordance with the control made by the control portion 68. After that, the operation is returned back to the processing in Step S21, and the predetermined pieces of processing in and after the processing in Step S21 are repetitively executed.

It is noted that when it is determined in Step S27 that the appli for the data broadcasting specified by App_id is in suspend (in the suspend state), the operation proceeds to processing in Step S31. In Step S31, the appli engine 74 moves the data stored in the evacuation memory 75B to the work memory 75A and activates the appli for the data broadcasting specified by App_id in accordance with the control made by the control portion 68. As a result, the appli for the data broadcasting being in suspend and specified by App_id is restarted from the suspend state thereof. After that, the operation is returned back to the processing in Step S21, and the predetermined pieces of processing in and after the processing in Step S21 are repetitively executed.

When it is determined in Step S26 that the discrimination result in Step S23 is not Execute, the operation proceeds to processing in Step S32. In Step S32, the control portion 68 determines whether or not the discrimination result in Step S23 is Inject_event. When it is determined in Step S32 that the discrimination result in Step S23 is Inject_event, the operation proceeds to processing in Step S33.

In Step S33, only when App_id of the trigger information concerned, and App_id of the appli for the data broadcasting being operated agree with each other, the control portion 68 controls the appli engine 74, thereby firing (executing) the event corresponding to Event_id of the trigger information in the application being operated. After that, the operation is returned back to the processing in Step S21, and the predetermined pieces of processing in and after the processing in Step S21 are repetitively executed.

When it is determined in Step S32 that the discrimination result in Step S23 is not Inject_event, the operation proceeds to processing in Step S34. In Step S34, the control portion 68 determines whether or not the discrimination result in Step S23 is Suspend. When it is determined in Step S34 that the discrimination result in Step S23 is Suspend, the operation proceeds to processing in Step S35.

In Step S35, the appli engine 74 evacuates the data representing the state of the appli for the data broadcasting being currently executed (That is, the data currently written to the work memory 75A. When there is the hierarchical structure in the information to be displayed, information representing the hierarchy of the information being displayed is contained therein) to the evacuation memory 75B in accordance with the control made by the control portion 68. After that, the operation is returned back to the processing in Step S21, and the predetermined pieces of processing in and after the processing in Step S21 are repetitively executed.

When it is determined in Step S34 that the discrimination result in Step S23 is not Suspend, the operation proceeds to processing in Step S36 because the discrimination result in Step S23 is Terminate. In Step S36, when the appli for the data broadcasting specified by App_id is in execution, the appli engine 74 ends the appli for the data broadcasting specified by App_id concerned in accordance with the control made by the control portion 68. In Step S37, the appli engine 74 deletes the data on the appli for the data broadcasting specified by App_id from both of the work memory 75A and the evacuation memory 75B in accordance with the control made by the control portion 68. Also, the appli engine 74 deletes the program data of the appli for the data broadcasting from either the recording portion 71 or the cache memory 73 in accordance with the control made by the control portion 68. After that, the operation is returned back to the processing in Step S21, and the predetermined pieces of processing in and after the processing in Step S21 are repetitively executed.

With that, the detailed description of the trigger information corresponding processing is ended.

According to the trigger information corresponding processing described above, the appli for the data broadcasting can be activated and the event can be fired and ended in conjunction with the television program or the CM. In addition, the appli for the data broadcasting being executed can be suspended while the state in which the appli for the data broadcasting is in execution is held, and can be restarted from the suspend state thereof.

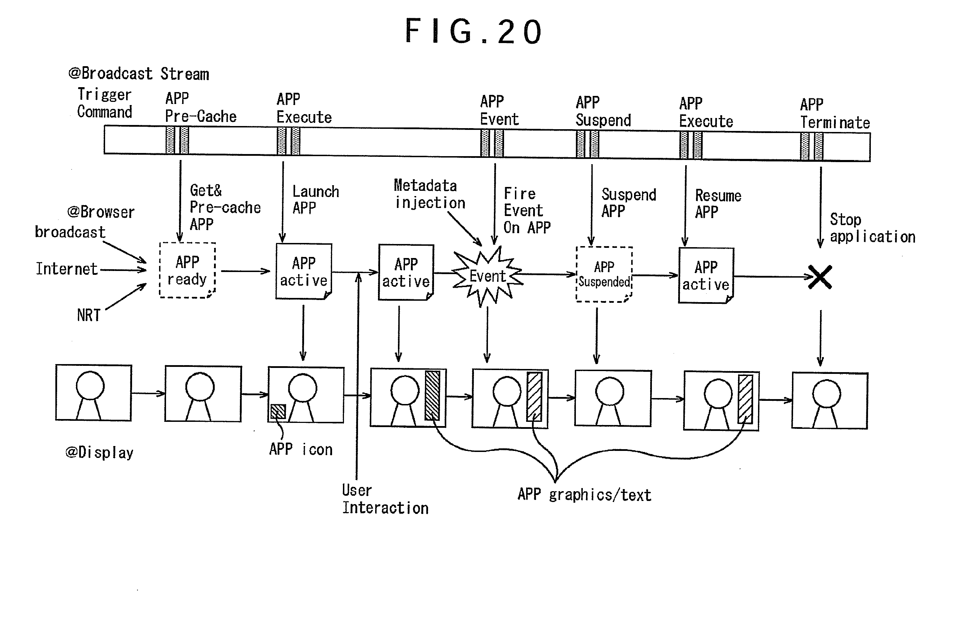

In addition, according to the trigger information corresponding processing described above, an operation of the appli for the data broadcasting as shown in FIG. 20 can be carried out.

FIG. 20 shows an example of an operation of the appli for the data broadcasting.

When the broadcasting apparatus 31 transmits the trigger information of the pre-cache command to instruct the receiving apparatus 60 to acquire the program data of the appli for the data broadcasting corresponding to the program in time with the proceeding of the television program to the receiving apparatus 60, in response to the trigger information of the pre-cache command, the receiving apparatus 60 acquires the program data of the appli for the data broadcasting.

Next, when the broadcasting apparatus 31 transmits the trigger information of the Execute command of the appli for the data broadcasting corresponding to the program in time with the proceeding of the television program to the receiving apparatus 60, in response to the trigger information of the Execute command, the receiving apparatus 60 activates the appli for the data broadcasting. This activation results in that an icon for urging the user to display the appli for the data broadcasting is displayed so as to be superimposed on the image of the program.

When the user selects this icon, the display by the appli for the data broadcasting is superimposed on the picture of the image of the program.

When the broadcasting apparatus 31 transmits the trigger information of the Inject_event command in time with the proceeding of the television program to the receiving apparatus 60, in response to the trigger information of the Inject_event command, in the receiving apparatus 60, the event is fired in the appli for the data broadcasting being executed (for example, the display is changed to another one).

Also, when the broadcasting apparatus 31 transmits the trigger information of the Suspend command of the appli for the data broadcasting at a predetermined timing to the receiving apparatus 60, in response to the trigger information of the Suspend command, in the receiving apparatus 60, the appli for the data broadcasting being executed is suspended (the associated data is held in the evacuation memory 75B). After that, when the broadcasting apparatus 31 transmits the trigger information of the Execute command of the appli for the data broadcasting to the receiving apparatus 60, in response to the trigger information of the Execute command, in the receiving apparatus 60, the appli for the data broadcasting which has been suspended is restarted.

In addition, when the broadcasting apparatus 31 transmits the trigger information of the Terminate command in time with the end of the television broadcasting to the receiving apparatus 60, in response to the trigger information of the Terminate command, in the receiving apparatus 60, the appli for the data broadcasting being executed is ended.

### [State Transition of Appli for Data Broadcasting]

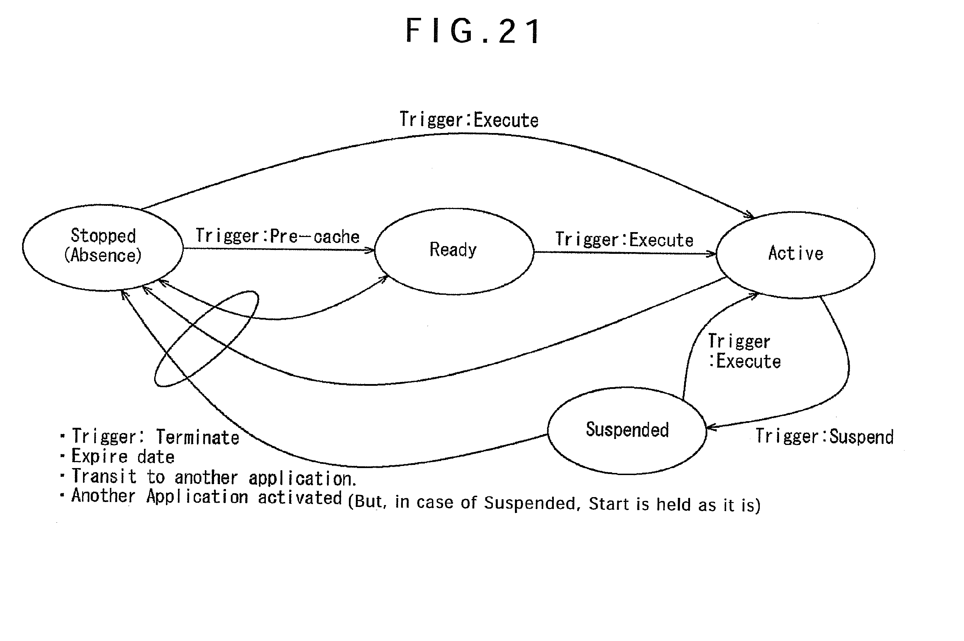

FIG. 21 is a view showing state transitions of the appli for the data broadcasting which is executed in the receiving apparatus 60.

As shown in FIG. 21, the appli for the data broadcasting transits to any one of four kinds states: a stopped state (Stopped), a ready state (Ready), an active state (Active), and a suspend state (Suspended).

The stopped state means a state in which the appli for the data broadcasting is not executed, and the program data on the appli for the data broadcasting is un-acquired. The ready state means that the program data on the appli for the data broadcasting is previously acquired, and the appli for the data broadcasting is not yet executed. The active state means that the appli for the data broadcasting is in execution. Also, the suspend state means that execution of the appli for the data broadcasting was interrupted, and information representing a state when the interruption was carried out is held in the evacuation memory 75B.

When the program data on the appli for the data broadcasting is acquired in accordance with the trigger information of the Pre_cache command while the appli for the data broadcasting transits to the suspended state, the appli for the data broadcasting transits to the ready state.

When the appli for the data broadcasting is activated in accordance with the trigger information of the Execute command while the appli for the data broadcasting transits to the suspend state or is in the ready state, the appli for the data broadcasting transits to the active state.

When the appli for the data broadcasting being executed is interrupted in accordance with the trigger information of the Suspend command while the appli for the data broadcasting transits to the active state, the appli for the data broadcasting transits to the suspend state.

When the appli for the data broadcasting which has been interrupted is restarted in accordance with the trigger information of the Execute command while the appli for the data broadcasting transits to the suspend state, the appli for the data broadcasting transits to the active state.

When the appli for the data broadcasting being executed is ended in accordance with the trigger information of the Terminate command while the appli for the data broadcasting transits to the ready state, the active state or the suspend state, the appli for the data broadcasting transits to the stopped state. It is noted that the transition of the appli for the data broadcasting to the stopped state may also occur when App_expire_date of the trigger information has elapsed, when other appli for the data broadcasting has been executed, or when the receiving channel has been changed to another one in addition to the case based on the trigger information of the Terminate command.

As has been described so far, according to the broadcasting system 30 of the embodiment of the present disclosure, the appli for the data broadcasting can be executed in conjunction with the program or the CM. In addition, when the appli for the data broadcasting is suspended, the appli for the data broadcasting can be restarted from the suspend state thereof.

In addition, even when the digital television program is retransmitted through the CATV network, the satellite communication network or the like, it is possible to realize the service of the contents for the data broadcasting which can be executed in conjunction with the television program.

Now, the series of processing described above either can be executed by hardware, or can be executed by software. When the series of processing described above is executed by the software, a program composing the software is installed, from a program recording medium, either in a computer incorporated in dedicated hardware, or in, for example, a general-purpose personal computer which can execute various kinds of functions by installing therein various kinds of programs.

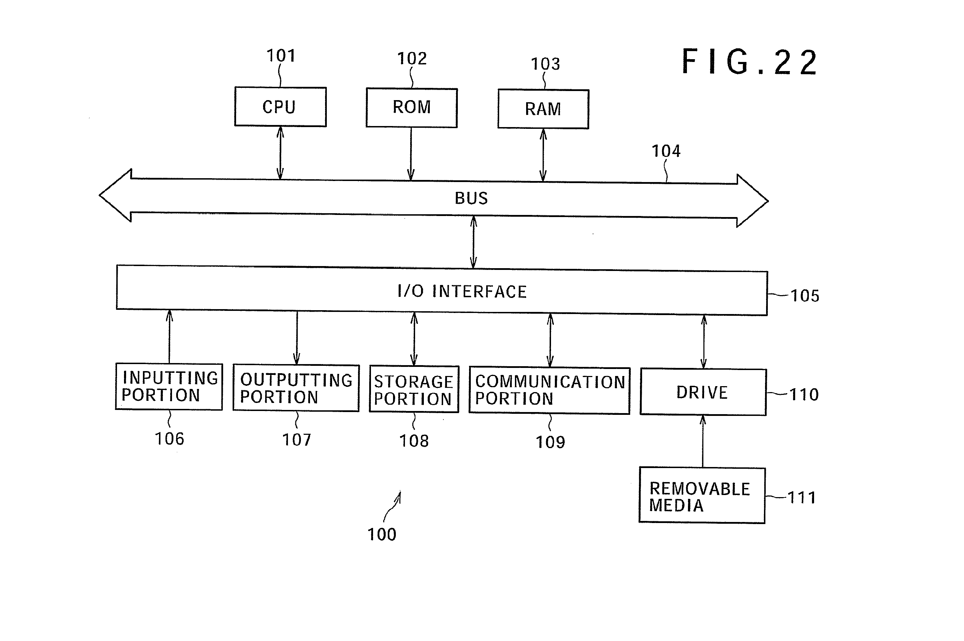

FIG. 22 is a block diagram showing an example of a configuration of hardware of a computer which executes the series of processing described above in accordance with a program.

In the computer 100, a Central Processing Unit (CPU) 101, a Read Only Memory (ROM) 102, and a Random Access Memory (RAM) 103 are connected to one another though a bus 104.

An input/output (I/O) interface 105 is further connected to the bus 104. An inputting portion 106, an outputting portion 107, a storage portion 108, a communication portion 109, and a drive 110 are connected to the I/O interface 105. In this case, the inputting portion 106 is composed of a keyboard, a mouse, a microphone or the like. The outputting portion 107 is composed of a display device, a speaker or the like. The storage portion 108 is composed of a hard disk, a non-volatile memory or the like. Also, the communication portion 109 is composed of a network interface or the like. The drive 110 drives a removable media 111 such as a magnetic disk, an optical disk, a magneto optical disk or a semiconductor memory.

In the computer configured as described above, the CPU 101, for example, loads a program stored in the storage portion 108 into the RAM 103 through both of the I/O interface 105 and the bus 104, and executes the program thus loaded, thereby executing the series of processing described above.

It is noted that the program which the computer executes either may be a program in accordance with which predetermined pieces of processing are executed in a time series manner along the order described in this specification, or may be a program in accordance with which the predetermined pieces of processing are executed in parallel or at a necessary timing such as when a call is made.

In addition, the program may be one which is processed by one computer or may be one which is processed in a distributed manner by plural computers. In addition, the program may be one which is transferred to a distant computer and is then executed by the distant computer.

In addition, in this specification, the system means the entire system composed of plural apparatuses.

It is noted that the embodiment of the present disclosure is by no means limited to the embodiment described above and various changes can be made without departing from the subject matter.

The present disclosure contains subject matter related to that disclosed in Japanese Priority Patent Application JP 2010-206851 filed in the Japan Patent Office on September 15, 2010.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A transmitting apparatus transmitting contents, comprising:
a trigger information generating section configured to generate trigger information on control for an application program which is executed in conjunction with the contents in a receiving apparatus;
an encoding section configured to encode the contents to generate an encoded stream;
a multiplexing section configured to multiplex the encoded stream to generate a multiplexed stream; and
a sending section configured to send the multiplexed stream,
wherein the trigger information is sent by carrying out at least one of the encoding with the contents by the encoding section or the multiplexing with the encoded stream by the multiplexing section.

2. The transmitting apparatus according to claim 1, wherein the encoding section encodes the contents to generate an MPEG2 video stream; and
the trigger information is described in use_data in a picture layer within video_sequence of the MPEG2 video stream to be encoded.

3. The transmitting apparatus according to claim 1, wherein the encoding section encodes the contents to generate an H.264 video stream; and
the trigger information is described in Supplementary Enhancement Information (SEI) of the H.264 video stream to be encoded.

4. The transmitting apparatus according to claim 1, wherein the multiplexing section multiplexes the encoded stream to generate a Transport Stream (TS); and
the trigger information is defined in either a program map table (PMT) or a selection information table (SIT) of the TS to be multiplexed into the TS.

5. The transmitting apparatus according to claim 1, wherein the multiplexing section multiplexes the encoded stream to generate an MP4 file in accordance with an ISO base media file format; and
the trigger information is disposed in a Box defined in File, Movie, Trak, Movie Fragment, or Track Fragment within the MP4 file.

6. A transmitting method for use in a transmitting apparatus transmitting contents, comprising:
generating trigger information on control for an application program which is executed in conjunction with the contents in a receiving apparatus by the transmitting apparatus;
encoding the contents to generate an encoded stream by the transmitting apparatus;
multiplexing the encoded stream to generate a multiplexed stream by the transmitting apparatus; and
sending the multiplexed stream by the transmitting apparatus,
wherein the trigger information is sent by carrying out at least one of the encoding with the contents in the encoding processing, or the multiplexing with the encoded stream in the multiplexing processing.

7. A program controlling a transmitting apparatus transmitting contents, the program causing a computer of the transmitting apparatus to execute processing, comprising:
generating trigger information on control for an application program which is executed in conjunction with the contents in a receiving apparatus;
encoding the contents to generate an encoded stream;
multiplexing the encoded stream to generate a multiplexed stream; and
sending the multiplexed stream,
wherein the trigger information is sent by carrying out at least one of the encoding with the contents in the encoding processing, or the multiplexing with the encoded stream in the multiplexing processing.

8. A receiving apparatus receiving contents transmitted thereto, comprising:
a receiving section configured to receive a multiplexed stream into which the contents are encoded to be multiplexed;
a multiply separating section configured to multiply separate the multiplexed stream;
a decoding section configured to decode an encoded stream multiply separated from the multiplexed stream to reproduce the contents; and
a control section configured to control processing about an application program which is executed in conjunction with the contents in accordance with trigger information acquired,
wherein the trigger information is acquired by carrying out at least one of the multiple separation from the multiplexed stream by the multiply separating section, or the decoding from the encoded stream by the decoding section.

9. The receiving apparatus according to claim 8, wherein the decoding section acquires the trigger information from use_date in a picture layer within video_sequence of an MPEG2 video stream multiply separated from the multiplexed stream.

10. The receiving apparatus according to claim 8, wherein the decoding section acquires the trigger information from Supplementary Enhancement Information (SEI) of an H.264 video stream multiply separated from the multiplexed stream.

11. The receiving apparatus according to claim 8, wherein the multiply separating section multiply separates the trigger information from a Transport Stream (TS) in accordance with a definition of either a program map table (PMT) or a selection information table (SIT) of the TS as the multiplexed stream.

12. The receiving apparatus according to claim 8, wherein the multiply separating section multiply separates the trigger information from a Box defined in File, Movie, Trak, Movie Fragment, or Trank Fragment of an MP4 file as the multiplexed stream.

13. A receiving method for use in a receiving apparatus receiving contents transmitted thereto, comprising:
receiving a multiplexed stream into which the contents are encoded to be multiplexed by the receiving apparatus;
multiply separating the multiplexed stream by the receiving apparatus;
decoding an encoded stream multiply separated from the multiplexed stream to reproduce the contents by the receiving apparatus; and
controlling processing about an application program which is executed in conjunction with the contents in accordance with trigger information acquired by the receiving apparatus,
wherein the trigger information is acquired by carrying out at least one of the multiple separation from the multiplexed stream in the multiply separating processing, or the decoding from the encoded stream in the decoding processing.

14. A program controlling a receiving apparatus receiving contents transmitted thereto, the program causing a computer of the receiving apparatus to execute processing, comprising:
receiving a multiplexed stream into which the contents are encoded to be multiplexed;
multiply separating the multiplexed stream;
decoding an encoded stream multiply separated from the multiplexed stream to reproduce the contents; and
controlling processing about an application program which is executed in conjunction with the contents in accordance with trigger information acquired,
wherein the trigger information is acquired by carrying out at least one of the multiple separation from the multiplexed stream in the multiply separating processing, or the decoding from the encoded stream in the decoding processing.

15. A broadcasting system comprising:
a transmitting apparatus transmitting contents; and
a receiving apparatus receiving the contents transmitted thereto, wherein
the transmitting apparatus includes
a trigger information generating section configured to generate trigger information on control for an application program which is executed in conjunction with the contents in a receiving apparatus,
an encoding section configured to encode the contents to generate an encoded stream,
a multiplexing section configured to multiplex the encoded stream to generate a multiplexed stream, and
a sending section configured to send the multiplexed stream,
in which the trigger information is sent by carrying out at least one of the encoding with the contents by the encoding section or the multiplexing with the encoded stream by the multiplexing section, and
the receiving apparatus includes
a receiving section configured to receive a multiplexed stream,
a multiply separating section configured to multiply separate the multiplexed stream,
a decoding section configured to decode an encoded stream multiply separated from the multiplexed stream to reproduce the contents, and
a control section configured to control processing about an application program which is executed in conjunction with the contents in accordance with trigger information acquired,
in which the trigger information is acquired by carrying out at least one of the multiple separation from the multiplexed stream by the multiply separating section, or the decoding from the encoded stream by the decoding section.
